# EUROPEAN PATENT SPECIFICATION

(11) **EP 4 558 422 B1**
(45) Date of publication and mention of the grant of the patent: **15.04.2026**
(21) Application number: 23753971.3
(22) Date of filing: 20.07.2023
(51) Int. Cl.: B65F 3/04

(54) **SYSTEM FOR WASTE COLLECTION, IN PARTICULAR FOR DIFFERENTIATED WASTE COLLECTION, AND METHOD THEREOF**
SYSTEM ZUR ABFALLSAMMLUNG, INSBESONDERE ZUR DIFFERENZIERTEN ABFALLSAMMLUNG UND VERFAHREN DAFÜR
SYSTÈME POUR LA COLLECTE DES DÉCHETS, EN PARTICULIER POUR LA COLLECTE DIFFÉRENCIÉE DES DÉCHETS, ET PROCÉDÉ ASSOCIÉ

(30) Priority: 21.07.2022 IT 202200015417
(43) Date of publication of application: 28.05.2025
(73) Proprietor: Nord Engineering S.p.A., 12023 Caraglio (CN) (IT)
(72) Inventor: ARMANDO, Massimo, 12100 Frazione S. Benigno, Cuneo (CN) (IT); ARMANDO, Diego, 12023 Caraglio (CN) (IT)
(74) Representative: Metroconsult Srl
(86) International application number: PCT/IB2023/057392
(87) International publication number: WO 2024/018408

(56) References cited:
- EP-A1- 3 150 513
- WO-A1-92/01612
- US-A1- 2014 056 637

## Description

The present invention relates to a system for waste collection, in particular for differentiated waste collection, according to the preamble of claim 1. The present invention also relates to an associated method for waste collection, in particular for differentiated waste collection.

Various waste collection systems are known in the art, which comprise a container for waste collection, in particular for differentiated waste collection (e.g. glass, paper, plastic, etc.), wherein said container comprises hooking means for lifting and moving it. Said container is usually so designed as to comprise at least one loading opening substantially located in the upper part of the container, and at least one unloading opening in the lower part of said container. Furthermore, the container is typically bell-shaped or has a substantially quadrangular and/or rectangular cross-section.

The waste collection systems known in the art also comprise a motor vehicle for handling and/or emptying such containers, wherein the motor vehicle is equipped with a dump body and a jointed and swivelling multi-axis mechanical arm, with which a gripping device is associated which can be coupled with the hooking means of the container for hooking up and handling the container, particularly for discharging the waste from said container.

Usually, said arm is hydraulically controlled and positioned between the dump body and a cabin of the motor vehicle; the arm is actuated in order to hook up and handle the container, for the purpose of discharging the waste into the dump body of the motor vehicle.

In a first type of systems known in the art, however, the arm is associated with the motor vehicle in such a way that it is just possible to handle and/or empty containers located on one side only relative to a direction of advancement of the motor vehicle. With this first type of waste collection systems, therefore, any containers located on the other side can only be handled after reversing the direction of advancement of the motor vehicle; it is therefore clear that such systems are very inefficient, in that the time necessary for handling and emptying containers located on both sides of the motor vehicle is at least doubled.

Some systems are also known in the art wherein the arm is associated with the motor vehicle in such a way as to allow for bilateral container handling and emptying operations, i.e. they permit handling and/or emptying containers located on both sides of the motor vehicle, with reference to the direction of advancement of the motor vehicle.

In this frame, prior-art systems require that the entire arm be rotatably moved about a vertical axis, such rotation allowing the arm to be positioned in such a way as to be able to handle containers located on a first side of the motor vehicle, and containers located on a second side of the motor vehicle can only be handled after rotating the entire arm about said vertical axis.

For example, patent No. DE19819079 relates to an arm for handling and/or emptying a waste container, wherein said arm is positioned on a base rotatable about a vertical axis, particularly by means of a toothed wheel associated with said base and driven by a suitable motor.

However, the waste collection system described in patent No. DE19819079 has some drawbacks as well; in fact, according to the teachings of said patent, bilateral collection inevitably requires long execution times, mainly due to the time necessary for rotating the entire arm about a vertical axis by moving the rotary base, which adds to the time necessary for extending/retracting the arm in order to align the arm's gripping device with the hooking means of the container. Moreover, the provision of the rotary base for rotating the entire arm about a vertical axis inevitably increases the difficulties and costs incurred for manufacturing the waste handling and collection system. In addition to this, the rotation of the rotary base inevitably implies some interference between the arm carried by said rotary base and the motor vehicle, which interference does not allow a 180° rotation of the base about the vertical axis, which would be necessary to achieve bilateral collection. Even if such a rotation of the base were possible, it would bring the container hooking grip into a wrong position, i.e. a position beside a cabin of the motor vehicle, as opposed to a (correct) position beside the dump body of the motor vehicle.

Patent No. EP3150513 relates to another system for bilateral waste collection, i.e. for handling and/or emptying containers located on both sides of the motor vehicle, with reference to the direction of advancement of the motor vehicle.

The system shown in patent No. EP3150513 comprises a motor vehicle (or a vehicle) provided with a device for handling and/or emptying a container, wherein the motor vehicle defines a horizontal direction of advancement and two lateral sides, and wherein said device comprises an articulated arm comprising:
- a vertical column fixedly connected to the motor vehicle in a non-articulated manner and substantially centered with respect to a plane of symmetry of the motor vehicle;
- a first segment connected to said vertical column by means of a first articulation and arranged substantially perpendicular to the direction of advancement of the motor vehicle, the axis of rotation of said first articulation being parallel to the direction of advancement of the motor vehicle and allowing the movement of the first segment in a transverse plane substantially perpendicular to the direction of advancement of the motor vehicle, wherein the first segment is rotatable about said first articulation from a vertical position to a lateral lowered position in which it is lowered towards either a first side of the motor vehicle or a second side of the motor vehicle with a freedom of movement of at least ±60° relative to the vertical;
- a second segment arranged substantially parallel to the direction of advancement of the motor vehicle and connected, without any articulation, to a distal end portion of the first segment;
- a gripping device adapted to be coupled to the hooking means of the container for hooking up and handling said container, wherein the gripping device is coupled to the second segment by means of a second articulation, wherein the second segment can be positioned on either side of the motor vehicle by rotating the first articulation, and wherein the second articulation allows the gripping device to be held in a vertical angular position regardless of the angular position of the first segment.

Nevertheless, even the waste collection system described in patent No. EP3150513 has a few drawbacks.

As a matter of fact, in order to be able to reach a container located on either a first side or a second side of the motor vehicle, at different distances from the latter, the first segment is telescopic, so that its length can be adjusted to prevent the container from contacting the vehicle during the rotational movement of the first segment for handling and/or emptying the container. The fact that the first segment of the arm is a telescopic one inevitably implies that it is subject to great stresses, in particular torsional stresses, mainly due to the weight of the container to be handled, and such stresses may jeopardize the proper operation of the arm and even cause the arm, in particular the telescopic first segment of said arm, to get stuck and/or damaged. In particular, the stresses undergone by the telescopic arm are particularly high during the sliding of the telescopic portions of the first segment, since the weight of the container is considerably offset from the longitudinal axis of the telescopic first segment, and this results in much wear and potential sticking of the mutually sliding elements of the telescopic first segment. It should be noted, in fact, that the container weighs upon the second segment, that said container is offset from the telescopic first segment, and that the weight of the offset container adversely affects the telescopic portions of the first segment. In this respect, it is known that a telescopic element can operate properly to lift a load only when the load is positioned centrally relative to a longitudinal sliding axis of the telescopic element; otherwise, i.e. if the load is offset from the longitudinal sliding axis of the telescopic element, considerable play and torsional stress will be generated between the various portions that make up the telescopic element, and said play/torsional stress will result, in turn, in serious problems suffered by the structure of the telescopic element.

Yet another system is known from WO 92/01612 A1. In the motor vehicle disclosed therein, a first arm of a coupling device is is connected to a vertical side-wall of the vehicle by means of a first articulation. The first arm is thus able to rotate about an axis parallel to the direction of advancement of the vehicle, i. e. it is able to move in a transversal plane that is perpendicular to the direction of advancement. A second arm is linked by a second articulation to the first arm. The second is also arranged substantially perpendicular to the direction of advancement of the motor vehicle and is able to rotate about an axis parallel to said direction of advancement, i. e. in a transversal plane that is substantially perpendicular to the direction of advancement.

In this frame, it is the main object of the present invention to provide a system for waste collection which is so realized as to overcome the drawbacks of the systems for waste collection currently known in the art.

In particular, it is one object of the present invention to provide a system for waste collection which is so realized as to allow for bilateral container handling and/or emptying, i.e. handling and/or emptying containers located on both sides of the motor vehicle, with reference to the direction of advancement of the latter, while at the same time permitting the execution of such bilateral container handling and emptying operations within a reasonably short time, in particular by considerably reducing the time necessary for hooking up and emptying the waste container in comparison with prior-art systems.

It is another object of the present invention to provide a bilateral system for waste collection which is so realized as to prevent the arm for handling and/or emptying the container from getting stuck and/or damaged.

It is a further object of the present invention to provide a system for waste collection which can be manufactured and operated at low cost and in a simple manner.

Such objects are achieved by the present invention through a system and a corresponding method for waste collection incorporating the features set out in the appended claims.

Further objects, features and advantages of the present invention will become apparent in light of the following detailed description and of the annexed drawings, which are provided herein merely by way of non-limiting explanatory example, wherein:
- Fig. 1 is a side view of a system for waste collection according to the present invention;
- Fig. 2a is a rear view of the system for waste collection according to the present invention in a configuration for handling a waste container located on a first side of a motor vehicle in order to discharge the contents of said container, whereas Fig. 2b is a rear view of the system for waste collection according to the present invention in a configuration for handling a waste container located on a second side of said motor vehicle;
- Figs. 3a and 3b show different phases of handling and emptying a waste container located on the first side of Fig. 2a, in accordance with the present invention;
- Figs. 4a and 4b show different phases of handling and emptying a waste collection container located on the second side of Fig. 2b, in accordance with the present invention.

Referring now to the annexed drawings, reference numeral 1 designates as a whole a system for waste collection according to the present invention.

The system 1 comprises a waste container 10, said container 10 being equipped with hooking means 11 for handling it, i.e. for lifting and moving it.

The container 10 is substantially bell-shaped; in particular, it has a substantially quadrangular and/or rectangular cross-section.

Furthermore, the container 10 comprises at least one loading opening 12 substantially located in the upper part of the container 10, through which waste can be loaded into the container 10, and at least one unloading opening (not shown in the annexed drawings) in the lower part of said container 10, through which the waste contained in the container 10 can be discharged.

The system 1 comprises also a motor vehicle (designated as a whole by reference numeral 20), which comprises a dump body 21, in particular adapted to receive waste discharged from the container 10, and a cabin 22 adapted to house at least a driver and/or an operator of the motor vehicle 20. In this regard, it should be noted that the dump body 21 may be of a type including a waste compactor, or said dump body 21 may be of a type including a device for washing a container 10.

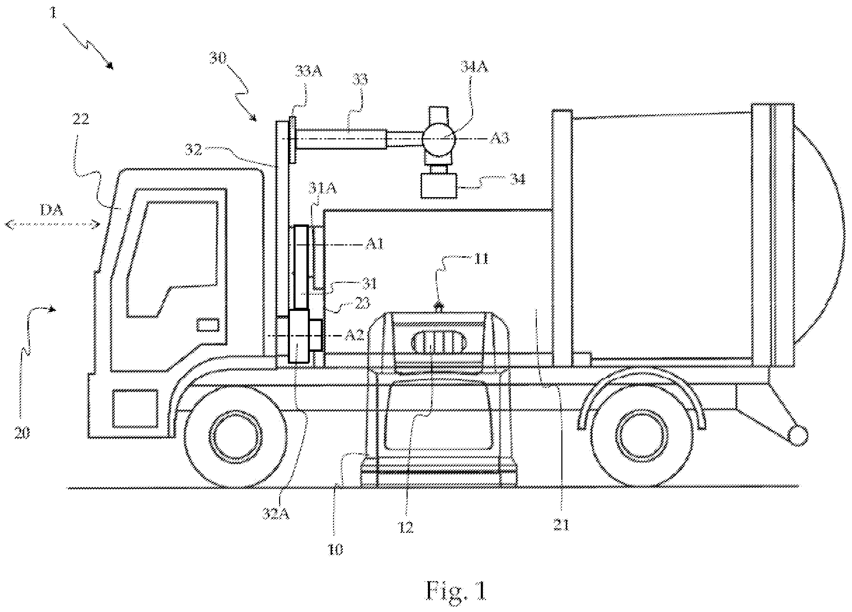

The motor vehicle 20 defines a direction of advancement (referred to as DA and by means of a dashed double arrow in Fig. 1), in particular substantially horizontal, and two lateral portions or areas, i.e. the areas adjacent to the right-hand and left-hand sides of the motor vehicle 20 with reference to said direction of advancement DA.

The motor vehicle 20 further comprises a coupling device (designated as a whole by reference numeral 30) comprising gripping means 34 adapted to be coupled to the hooking means 11 of the container 10 for handling and/or emptying said container 10; according to a preferred embodiment, the gripping means 34 of the coupling device 30 and the container 10 with its hooking means 11 are made in accordance with the teachings of European patent No. EP1172308B1 in the name of the present Applicant, the contents of which are implicitly referred to in the present description.

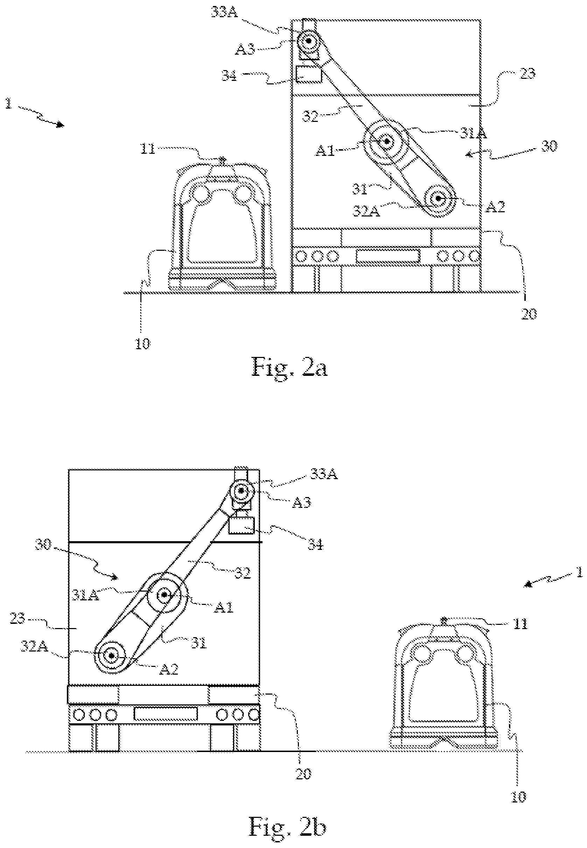

In this respect, it should be noted that, as will be explained hereinafter (and as shown in Figures 2a to 4b), the coupling device 30 is of the bilateral type, since it permits handling containers 10 located on both sides or lateral areas of the motor vehicle 20.

In this context, the coupling device 30 comprises a first arm 31 connected to a vertical wall 23 of the motor vehicle 20 by means of a first articulation 31A, wherein said first arm 31 is arranged substantially perpendicular to the direction of advancement DA of the motor vehicle 20. As far as the first articulation 31A is concerned, it is adapted to allow the first arm 31 to rotate about a first axis of rotation A1 that is parallel to the direction of advancement DA of the motor vehicle 20 and to allow the first arm 31 to move in a transversal plane that is substantially perpendicular to the direction of advancement DA of the motor vehicle 20.

It can therefore be noticed that the first arm 31 and the associated first articulation 31A have at least one degree of freedom, in particular only one degree of freedom of the rotational type, with respect to the vertical wall 23; moreover, it must be pointed out that said vertical wall 23 may be, without distinction, a vertical surface of the dump body 21 (as shown by way of example in Fig. 1), or a surface of the cabin 22, or another vertical member (e.g. a plate or a column) fixed to the motor vehicle 20 in a non-articulated manner and adapted to support the coupling device 30, in particular through the connection of the first arm 31 of said coupling device 30, wherein said connection is effected by means of said first articulation 31A.

In accordance with the present invention, said first articulation 31A is configured in such a way as to allow the first arm 31 to rotate by approximately 360° about the first axis of rotation A1; basically, the first articulation 31A thus allows the first arm 31 to make a rotation from a vertical position to a lateral position (in which said first arm 31 is lowered or lifted towards a first or a second lateral portion of the motor vehicle 20 with a freedom of movement of about ± 180°.

Furthermore, in accordance with the present invention, the coupling device 30 comprises:
- a second arm 32 connected to the first arm 31 by means of a second articulation 32A, wherein said second arm 32 is arranged substantially perpendicular to the direction of advancement DA of the motor vehicle 20, said second articulation 32A being adapted to allow the second arm 32 to rotate about a second axis of rotation A2 that is parallel to the direction of advancement DA of the motor vehicle 20, wherein said second articulation allows the second arm 32 to move in a transversal plane that is substantially perpendicular to the direction of advancement DA of the motor vehicle 20;
- a third arm 33 connected to the second arm 32 in such a way as to lie on a longitudinal axis A3 arranged substantially parallel to the direction of advancement DA of the motor vehicle 20, wherein said gripping means 34 for handling and/or emptying said container 10 are connected to the third arm 33.

In accordance with the present invention, said second articulation 32A is configured to allow the second arm 32 to rotate by approximately 360° about the second axis of rotation A2.

In this frame, the assembly including the first articulation 31A, the first arm 31, the second articulation 32A and the second arm 32 is some sort of crank mechanism that permits moving the third arm 32 and the gripping means 34 in order to bring them closer to the container 10 and to its hooking means 11.

Moreover, the connection between the first articulation 31A and the vertical wall 23 is provided at a height of said vertical wall 23 that exceeds the length of the first arm 31, so as to allow said rotation of the first arm 31 by approximately 360° about the first axis of rotation A1 without the first arm 31 interfering, as it rotates, with any surfaces of the motor vehicle 20 near the base of said vertical wall 23.

In accordance with a preferred embodiment, the third arm 33 is connected to the second arm 32 by means of a third articulation 33A adapted to allow the third arm 33 to rotate about said longitudinal axis A3 that is substantially parallel to the direction of advancement DA of the motor vehicle 20; as a result, said third articulation 33A clearly permits a rotational movement of the third arm 33 about its own longitudinal axis A3, in particular said longitudinal axis A3 substantially coinciding with a third axis of rotation (which can also, therefore, be referred to as A3) of said third arm 33.

Preferably, each one of said articulations 31A, 32A, 33A is positioned at the ends of the respective arms 31, 32, 33, i.e.:
- the first articulation 31A is positioned in proximity to one of the two ends of the first arm 31 (basically, the first articulation 31A is positioned in proximity to a first end of the first arm 31);
- the second articulation 32A is positioned in proximity to the other one of the two ends of the first arm 31 and in proximity to one of the two ends of the second arm 32 (therefore, the second articulation 32A is positioned in proximity to a second end of the first arm 31 and in proximity to a first end of the second arm 32);
- the third articulation 33A is positioned in proximity to the other one of the two ends of the second arm 32 and in proximity to one of the two ends of the third arm 33 (therefore, the third articulation 33A is positioned in proximity to a second end of the second arm 32 and in proximity to a first end of the third arm 33).

In light of the above description and of the annexed drawings, it is apparent that the second arm 32 extends in a plane that is substantially parallel to the one in which the first arm 31 lies, while the third arm 33 extends perpendicular to the planes in which the first arm 31 and the second arm 32 extend, in particular said third arm 33 extending from a second end of the second arm 32. The third arm 33 is therefore fixed to a distal portion of the second arm 32 (i.e. to an end of the second arm 32 which is opposite the one fixed to the first arm 31), so as to form an angle of approximately 90° with said second arm 32 in a plan view of the motor vehicle 20 and of the associated coupling device 30.

According to a preferred embodiment, with particular reference to Fig. 1, the third arm 33 is of the telescopic type and is composed of at least two segments, in particular tubular ones, adapted to slide one within the other for the purpose of increasing or decreasing the extension of (i.e. extending or retracting) the third arm 33; this feature allows to position the gripping means 34 at different distances from the third articulation 33A and as a function of the position of the container 10 to be handled.

In addition, the gripping means 34 are preferably connected to the third arm 33 by means of a fourth articulation 34A adapted to allow said gripping means 34 to be moved for the purpose of aligning them with the hooking means 11 of the container 10.

Preferably, the fourth articulation 34A is of a type suitable for connecting the gripping means 34 to the third arm 33 in such a way that said gripping means 34 can have several degrees of freedom relative to the third arm 33. Furthermore, the gripping means 34 and the associated fourth articulation 34A are connected to a distal end of the third arm 33, i.e. to an end of the third arm 33 which is opposite that end of the third arm 33 which is connected to the second arm 32, in particular by means of the third articulation 33A.

In accordance with the present invention, the articulations 31A, 32A, 33A, 34A can be activated by any type of actuation means (not shown in the annexed drawings), e.g. mechanical, electric, electronic, hydraulic, etc.; also, said actuation means may comprise hydraulic or pneumatic cylinders, electric motors, gear motors, slewing rings, and so forth. Moreover, each articulation 31A, 32A, 33A, 34A and the associated actuation means are preferably controlled and managed by a control unit (not shown in the annexed drawings) of the system 1 according to the present invention, wherein, in particular, said control unit can be located aboard the motor vehicle 20 (e.g. inside the cabin 22) and can be managed or controlled by at least one user of said motor vehicle 20.

From the above description it clearly emerges that the movement of the coupling device 30 is obtained by rotating the first arm 31 about the first axis of rotation A1 and by rotating the second arm 32 about the second axis of rotation A2, and that such rotations of the first arm 31 and second arm 32 permit handling and/or emptying containers 10 located on both sides of the motor vehicle 20, with reference to the direction of advancement DA of the motor vehicle 20.

In particular, said rotations of the first arm 31 and second arm 32 allow the coupling device 30 to be moved relatively quickly, with a considerably shorter time required for hooking up and emptying the container 10 in comparison with prior-art systems. At the same time, said rotations of the first arm 31 and second arm 32 permit extending and retracting the coupling device 30 to reach a container 10 without requiring the use of any telescopic elements for changing the configuration and length of the coupling device 30, thus preventing the coupling device 30 from undergoing any sticking and/or damage mainly due to the considerable torsional stresses to which such telescopic elements are subjected because of the weight of the container 10 to be handled, considering also that the container 10 is offset from the longitudinal axis of the first arm 31 and second arm 32. In this regard, it should be noted that the first arm 31 and the second arm 32 are joined to each other and to the vertical wall 23 by means of respective articulations 31A, 32A that make it possible to maintain a cantilever lever arm relative to their own axes, without suffering from the problems that affect the telescopic elements known in the art. This also applies to the third articulation 33A that connects the third arm 33 in a cantilever fashion to the second arm 32, said third articulation 33A being such as to adequately bear both the weight of the container 10 and the weight of the third arm 33 and of the elements carried by said third arm 33. In addition, also the third arm 33, which is of the telescopic type, is allowed to work appropriately while lifting the container 10, since the weight of the container 10 is positioned centrally relative to the longitudinal axis A3 of the third arm 33 (said longitudinal axis A3 being also the axis along which the segments, in particular of the tubular type, can slide one within the other for the purpose of increasing or decreasing the extension of the third arm 33); it is therefore apparent that the third arm 33 can lift the container 10 without any play or torsional stress being generated between the segments forming said telescopic third arm 33.

For the purpose of handling and/or emptying the container 10, the present invention also provides a method for waste collection, in particular for differentiated waste collection, which is illustrated by way of example in Figures 2a to 4b, wherein the working cycle comprises different phases or positions.

In particular, said method may comprise a start phase (which may also be defined as "idle" phase), wherein the coupling device 30 does not extend past the width of the motor vehicle 20. This start (or "idle") phase is shown in Figures 2a and 2b, which show the start phase for handling a container 10 located on the left-hand side (Fig. 2a) and on the right-hand side (Fig. 2b), respectively, with reference to the direction of advancement DA of the motor vehicle 20. It must be pointed out that in Figures 2a and 2b the first arm 31 and the second arm 32 are shown in an oblique position; it is however clear that during the start (or "idle") phase the first arm 31 and the second arm 32 may also be positioned vertically or otherwise.

The method according to the present invention comprises a phase of extending the coupling device 30 in order to position the gripping means 34 in such a way that they can be coupled to the hooking means 11 of the container 10; during this extension phase, the first arm 31 and the second arm 32 rotate about the first axis of rotation A1 and about the second axis of rotation A2, respectively. It should be noted that said extension phase may also include a step of rotating the third arm 33 about the longitudinal axis A3 and/or a step of extending/retracting the telescopic third arm 33 and/or a step of moving said gripping means 34 by means of a fourth articulation 34A.

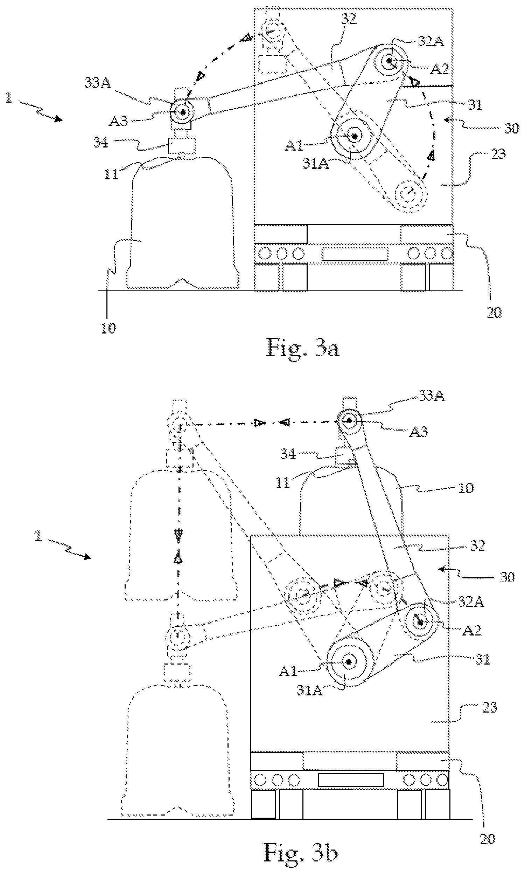

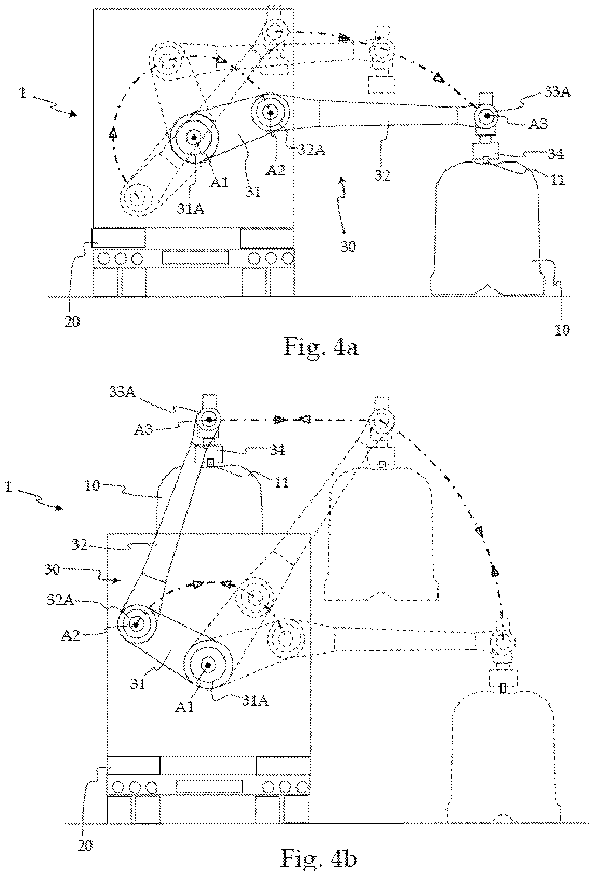

Figures 3a and 4a show a possible phase of coupling the gripping means 34 of the coupling device 30 to the hooking means 11 of the container 10 (starting from an idle phase, indicated by a dashed line in Figures 3a and 3b), in particular said coupling phase being carried out by activating a mechanism (not shown in the annexed drawings) adapted to ensure the connection between the gripping means 34 and the hooking means 11. In particular, Fig. 3a shows a coupling phase executed on a container 10 located on the left-hand side relative to the direction of advancement DA of the motor vehicle 20, whereas Fig. 4a shows a coupling phase executed on a container 10 located on the right-hand side relative to said direction of advancement DA.

The method according to the present invention then comprises a phase of handling (e.g. lifting) the container 10 (shown in Fig. 3b for a container 10 located on the left-hand side relative to the direction of advancement DA of the motor vehicle 20, and in Fig. 4b for a container located on the right-hand side relative to said direction of advancement DA), wherein the first arm 31 and the second arm 32 rotate about the first axis of rotation A1 and about the second axis of rotation A2, respectively, in order to lift the container 10, particularly in order to position it above a dump body 21 of the motor vehicle 20. It should be noted that said handling phase may also include a step of rotating the third arm 33 about the longitudinal axis A3 and/or a step of extending/retracting the telescopic third arm 33 and/or a step of moving said gripping means 34 by means of a fourth articulation 34A.

The method according to the present invention may then comprise a phase of emptying the container 10, in particular carried out by activating a mechanism (not shown in the annexed drawings) of the gripping means 34 and/or of the hooking means 11 adapted to open the container 10 and discharge the contents thereof into the dump body 21 of the motor vehicle 20.

It must be pointed out that the method according to the present invention may also comprise a phase of washing the container 10, e.g. carried out by positioning said container 10 within the dump body 21 (or within another portion of the motor vehicle 20) and by activating a washing device available in said dump body 21.

Once the above-described working cycle is complete, it is repeated (in opposite direction and sequence) in order to position the container 10 back into its original position and, optionally, to return the coupling device 30 to the start (or "idle") phase. In this regard, it must be highlighted once again that the entire method or working cycle can be executed on either side of the motor vehicle 20; it is therefore clear that the coupling device 30 according to the present invention is a bilateral one.

Therefore, it is apparent that the method according to the present invention comprises at least:
- a phase of extending the coupling device 30 in order to position the gripping means 34 in such a way that they can be coupled to the hooking means 11 of the container 10, and
- a phase of handling the container 10 by means of the coupling device 30,
wherein said extension and handling phases are carried out through the following steps:
- activating a first articulation 31A that joins a first arm 31 of the coupling device 30 to a vertical wall 23 of the motor vehicle 20 so that said first arm 31 is arranged substantially perpendicular to a direction of advancement DA of the motor vehicle 20, wherein the activation of the first articulation 31A allows the first arm 31 to rotate about a first axis of rotation A1 that is parallel to the direction of advancement DA of the motor vehicle 20 and allows the first arm 31 to move in a transversal plane that is substantially perpendicular to the direction of advancement DA of the motor vehicle 20;
- activating a second articulation 32A that joins a second arm 32 of the coupling device 30 to said first arm 31 so that said second arm 32 is arranged substantially perpendicular to the direction of advancement DA of the motor vehicle 20, wherein the activation of the second articulation 32A allows the second arm 32 to rotate about a second axis of rotation A2 that is parallel to the direction of advancement DA of the motor vehicle 20 and allows the second arm 32 to move in a transversal plane that is substantially perpendicular to the direction of advancement DA of the motor vehicle 20.

It is apparent that said steps of activating the first articulation 31A and the second articulation 32A are executed in order to permit the switching from one phase to another of the method according to the present invention, in that they are required for switching from the start phase to the extension phase and from the extension phase to the handling phase (and the same occurs when said phases are repeated in the opposite direction and sequence in order to position the container 10 back into its original position and, optionally, to return the coupling device 30 to the start phase).

In accordance with the present invention, one or more phases of the method according to the present invention may either be controlled by a human operator or be executed automatically. In particular, automatic operation can be achieved by using a plurality of sensors connected to a control unit, so as to allow said control unit to:
- know the exact position of the hooking means 11 of the container 10 for the purpose of moving the coupling device 30 and properly positioning the gripping means 34, in particular by rotating the first arm 31 and the second arm 32 about the first axis of rotation A1 and about the second axis of rotation A2, respectively;
- know the position and dimensions of the container 10 during the various lifting, emptying or washing phases, for handling the container 10 correctly by rotating the first arm 31 and the second arm 32 about the first axis of rotation A1 and about the second axis of rotation A2, respectively, preventing it from colliding with any obstacles and/or the motor vehicle 20, and positioning it appropriately relative to the motor vehicle 20 for the purpose of emptying or washing said container 10.

It should be noted that said control unit is preferably so realized as to comprise a memory, in particular a non-volatile one, adapted to store the information processed by the control unit based on the information received from the sensors. Several operating programs for the coupling device 30 may also be encoded into said memory (e.g. different operating programs depending on the type of container 10; in particular said container 10 may be of the following types: underground; partially buried; above-ground; large, medium or small volume for each one of the underground, partially buried or above-ground types), as well as the instructions necessary for the execution of the various functions that can be performed by the motor vehicle 20.

The features of the present invention, as well as the advantages thereof, are apparent from the above description.

In particular, the fact that the coupling device 30 according to the present invention is realized in such a way that it can be moved by rotating the first arm 31 and the second arm 32 about the first axis of rotation A1 and about the second axis of rotation A2, respectively, makes it possible to overcome numerous problems suffered by prior-art waste collection systems.

Indeed, the peculiar provisions of the coupling device 30 according to the present invention allow the system 1 according to the present invention to provide bilateral handling and/or emptying of containers 10, i.e. handling and/or emptying containers 10 located on both sides of the motor vehicle 20, with reference to the direction of advancement DA of the motor vehicle 20.

In addition, the coupling device 30 according to the present invention is realized in such a way that it can effect said bilateral handling and/or emptying within particularly short times, in particular by considerably reducing, compared with prior-art systems, the time necessary for hooking up and emptying the container 10.

A further advantage of the coupling device 30 according to the present invention lies in the fact that its movement (obtained by rotating the first arm 31 and the second arm 32 about the first axis of rotation A1 and about the second axis of rotation A2, respectively) makes it possible to prevent the coupling device 30 itself from getting stuck and/or damaged, which may otherwise occur when telescopic elements are employed, which are subject to considerable stresses, particularly torsional stresses, mainly due to the weight of the container 10 to be handled. In this regard, it should be noted that the first arm 31 and the second arm 32 are joined to each other and to the vertical wall 23 by means of respective articulations 31A, 32A that make it possible to maintain a cantilever lever arm relative to their longitudinal axis, without suffering from the problems that affect the telescopic elements known in the art. This also applies to the third articulation 33A that connects the third arm 33 in a cantilever fashion to the second arm 32, said third articulation 33A being such as to adequately bear both the weight of the container 10 and the weight of the third arm 33 and of the elements carried by said third arm 33. In addition, also the third arm 33, which is of the telescopic type, is allowed to work appropriately while lifting the container 10, since the weight of the container 10 is positioned centrally relative to the longitudinal axis A3 of the third arm 33, which can thus lift the container 10 without any play or torsional stress being generated between the segments forming said telescopic third arm 33.

A further advantage of the coupling device 30 according to the present invention lies in the fact that it is so realized as to ensure lower manufacturing costs and simpler construction and operation.

The system 1 for waste collection described herein by way of example may be subject to many possible variations without departing from the scope of the invention as defined by the independent claims; it is also clear that in the practical implementation of the invention the illustrated details may have different shapes or be replaced with other technically equivalent elements as long as it falls within the scope of the independent claims.

It can therefore be easily understood that the present invention is not limited to the above-described system for waste collection, but may be subject to many modifications, improvements or replacements of equivalent parts and elements as long as it does not depart from the scope of the appended claims.

## Claims

1. System (1) for waste collection, in particular for differentiated waste collection, comprising:
- a waste container (10) equipped with hooking means (11) for moving it,
- a motor vehicle (20) that defines a direction of advancement (DA) and two lateral portions or areas relative to said direction of advancement (DA),
wherein said motor vehicle (20) comprises a coupling device (30) comprising gripping means (34) adapted to be coupled to the hooking means (11) of the container (10) for handling and/or emptying said container (10),
and wherein said coupling device (30) comprises a first arm (31) connected to a vertical wall (23) of the motor vehicle (20) by means of a first articulation (31A), wherein said first arm (31) is arranged substantially perpendicular to the direction of advancement (DA) of the motor vehicle (20),
said first articulation (31A) being adapted to allow the first arm (31) to rotate about a first axis of rotation (A1) that is parallel to the direction of advancement (DA) of the motor vehicle (20) and to allow the first arm (31) to move in a transversal plane that is substantially perpendicular to the direction of advancement (DA) of the motor vehicle (20),
said system (1) being **characterized in that**
said first articulation (31A) is configured to allow the first arm (31) to rotate by approximately 360° about the first axis of rotation (A1),
wherein the coupling device (30) further comprises:
- a second arm (32) connected to the first arm (31) by means of a second articulation (32A), wherein said second arm (32) is arranged substantially perpendicular to the direction of advancement (DA) of the motor vehicle (20), said second articulation (32A) being adapted to allow the second arm (32) to rotate about a second axis of rotation (A2) that is parallel to the direction of advancement (DA) of the motor vehicle (20) and to allow the second arm (32) to move in a transversal plane that is substantially perpendicular to the direction of advancement (DA) of the motor vehicle (20);
- a third arm (33) connected to the second arm (32) in such a way as to lie on a longitudinal axis (A3) arranged substantially parallel to the direction of advancement (DA) of the motor vehicle (20), wherein said gripping means (34) are connected to the third arm (33).

2. System (1) according to claim 1, **characterized in that** the connection between the first articulation (31A) and the vertical wall (23) is provided at a height of said vertical wall (23) that exceeds the length of the first arm (31).

3. System (1) according to one or more of the preceding claims, **characterized in that** said second articulation (32A) is configured to allow the second arm (32) to rotate by approximately 360° about the second axis of rotation (A2).

4. System (1) according to one or more of the preceding claims, **characterized in that** the third arm (33) is connected to the second arm (32) by means of a third articulation (33A) adapted to allow the third arm (33) to rotate about said longitudinal axis (A3) that is substantially parallel to the direction of advancement (DA) of the motor vehicle (20).

5. System (1) according to one or more of the preceding claims, **characterized in that** each one of said articulations (31A, 32A, 33A) is positioned at the ends of the respective arms (31, 32, 33).

6. System (1) according to one or more of the preceding claims, **characterized in that** the third arm (33) is of the telescopic type and is composed of at least two segments, in particular tubular ones, adapted to slide one within the other for the purpose of increasing or decreasing the extension of the third arm (33).

7. System (1) according to one or more of the preceding claims, **characterized in that** said gripping means (34) are connected to the third arm (33) by means of a fourth articulation (34A) adapted to allow said gripping means (34) to be moved for the purpose of aligning them with the hooking means (11) of the container (10).

8. System (1) according to claim 7, **characterized in that** the gripping means (34) and the fourth articulation (34A) are connected to a distal end of the third arm (33), in particular to an end of the third arm (33) which is opposite that end of the third arm (33) which is connected to the second arm (32).

9. System (1) according to one or more of the preceding claims, **characterized in that** the articulations (31A, 32A, 33A, 34A) are activated by actuating means controlled and managed by a control unit of the system (1).

10. Method for waste collection, in particular for differentiated waste collection, by means of a system (1) according to claim 1, wherein said system (1) comprises:
- a waste container (10) equipped with hooking means (11) for moving it;
- a motor vehicle (20) that defines a direction of advancement (DA) and two lateral portions or areas relative to said direction of advancement (DA),
wherein said motor vehicle (20) comprises a coupling device (30) comprising gripping means (34) adapted to be coupled to the hooking means (11) of the container (10) for handling and/or emptying said container (10),
said method comprising at least:
- a phase of extending the coupling device (30) in order to position the gripping means (34) in such a way that they can be coupled to the hooking means (11) of the container (10), and
- a phase of handling the container (10) by means of the coupling device (30),
wherein in the method said extension and handling phases are carried out through the following steps:
- activating a first articulation (31A) that joins a first arm (31) of the coupling device (30) to a vertical wall (23) of the motor vehicle (20) so that said first arm (31) is arranged substantially perpendicular to a direction of advancement (DA) of the motor vehicle (20), wherein the activation of the first articulation (31A) allows the first arm (31) to rotate about a first axis of rotation (A1) that is parallel to the direction of advancement (DA) of the motor vehicle (20) and allows the first arm (31) to move in a transversal plane that is substantially perpendicular to the direction of advancement (DA) of the motor vehicle (20);
- activating a second articulation (32A) that joins a second arm (32) of the coupling device (30) to said first arm (31) so that said second arm (32) is arranged substantially perpendicular to the direction of advancement (DA) of the motor vehicle (20), wherein the activation of the second articulation (32A) allows the second arm (32) to rotate about a second axis of rotation (A2) that is parallel to the direction of advancement (DA) of the motor vehicle (20) and allows the second arm (32) to move in a transversal plane that is substantially perpendicular to the direction of advancement (DA) of the motor vehicle (20).

11. Method (1) according to claim 10, **characterized in that** said extension and handling phases comprise at least one of the following steps:
- activating a third articulation (33A) that joins a third arm (33) of the coupling device (30) to said second arm (32) so that said third arm (33) lies on a longitudinal axis (A3) arranged substantially parallel to the direction of advancement (DA) of the motor vehicle (20), wherein the activation of the third articulation (33A) allows the third arm (33) to rotate about said longitudinal axis (A3);
- activating actuating means in order to extend or retract the third arm (33) of the telescopic type;
- activating a fourth articulation (34A) that joins the third arm (33) to said gripping means (34), wherein the activation of said fourth articulation (34A) allows the gripping means (34) to be aligned with the hooking means (11) of the container (10).

12. Method (1) according to one or more of claims 10 and 11, **characterized in that** it comprises a phase of coupling the gripping means (34) of the coupling device (30) to the hooking means (11) of the container (10), wherein said coupling phase is carried out by activating a mechanism adapted to ensure the connection between said gripping means (34) and said hooking means (11).

13. Method (1) according to one or more of claims 10 to 12, **characterized in that** it comprises a phase of emptying the container (10), wherein said emptying phase is carried out by activating a mechanism of the gripping means (34) and/or of the hooking means (11) which is adapted to ensure the opening of the container (10) and the discharge of its contents into a dump body (21) of the motor vehicle (20).

14. Method (1) according to one or more of claims 10 to 13, **characterized in that** one or more phases are controlled and managed by a control unit, in particular associated with a plurality of sensors.

## Patentansprüche

1. System (1) zur Abfallsammlung, insbesondere zur getrennten Abfallsammlung, umfassend:
- einen Abfallbehälter (10), der mit einer Hakenvorrichtung (11) zum Bewegen desselben ausgestattet ist,
- ein Kraftfahrzeug (20), das eine Vorwärtsrichtung (DA) und zwei seitliche Abschnitte oder Bereiche relativ zu dieser Vorwärtsrichtung (DA) definiert,
wobei das Kraftfahrzeug (20) eine Kupplungsvorrichtung (30) umfasst, die eine Greifvorrichtung (34) umfasst, die dazu ausgelegt ist, mit der Hakenvorrichtung (11) des Behälters (10) gekoppelt zu werden, um den Behälter (10) zu handhaben und/oder zu entleeren (10), und wobei die Kupplungsvorrichtung (30) einen ersten Arm (31) umfasst, der mittels eines ersten Gelenks (31A) mit einer vertikalen Wand (23) des Kraftfahrzeugs (20) verbunden ist, wobei der erste Arm (31) im Wesentlichen senkrecht zur Vorwärtsrichtung (DA) des Kraftfahrzeugs (20) angeordnet ist,
wobei das erste Gelenk (31A) so ausgelegt ist, dass es dem ersten Arm (31) ermöglicht, sich um eine erste Drehachse (A1) zu drehen, die parallel zur Vorwärtsrichtung (DA) des Kraftfahrzeugs (20) verläuft, und dass es dem ersten Arm (31) ermöglicht, sich in einer Querebene zu bewegen, die im Wesentlichen senkrecht zur Vorwärtsrichtung (DA) des Kraftfahrzeugs (20) verläuft,
wobei das System (1) **dadurch gekennzeichnet ist, dass**
das erste Gelenk (31A) so konfiguriert ist, dass es dem ersten Arm (31) ermöglicht, sich um ungefähr 360° um die erste Drehachse (A1) zu drehen, wobei die Kupplungsvorrichtung (30) ferner umfasst:
- einen zweiten Arm (32), der mit dem ersten Arm (31) mittels eines zweiten Gelenks (32A) verbunden ist, wobei der zweite Arm (32) im Wesentlichen senkrecht zur Vorwärtsrichtung (DA) des Kraftfahrzeugs (20) angeordnet ist, wobei das zweite Gelenk (32A) so ausgelegt ist, dass es dem zweiten Arm (32) ermöglicht, sich um eine zweite Drehachse (A2) zu drehen, die parallel zur Vorwärtsrichtung (DA) des Kraftfahrzeugs (20) verläuft, und dass es dem zweiten Arm (32) ermöglicht, sich in einer Querebene zu bewegen, die im Wesentlichen senkrecht zur Vorwärtsrichtung (DA) des Kraftfahrzeugs (20) verläuft;
- einen dritten Arm (33), der mit dem zweiten Arm (32) so verbunden ist, dass er auf einer Längsachse (A3) liegt, die im Wesentlichen parallel zur Vorwärtsrichtung (DA) des Kraftfahrzeugs (20) angeordnet ist, wobei die Greifvorrichtung (34) mit dem dritten Arm (33) verbunden ist.

2. System (1) gemäß Anspruch 1, **dadurch gekennzeichnet, dass** die Verbindung zwischen dem ersten Gelenk (31A) und der vertikalen Wand (23) in einer Höhe der vertikalen Wand (23) vorgesehen ist, die die Länge des ersten Arms (31) überschreitet.

3. System (1) gemäß einem oder mehreren der vorstehenden Ansprüche, **dadurch gekennzeichnet, dass** das zweite Gelenk (32A) so konfiguriert ist, dass es dem zweiten Arm (32) ermöglicht, sich um etwa 360° um die zweite Drehachse (A2) zu drehen.

4. System (1) gemäß einem oder mehreren der vorstehenden Ansprüche, **dadurch gekennzeichnet, dass** der dritte Arm (33) mit dem zweiten Arm (32) mittels eines dritten Gelenks (33A) verbunden ist, das so ausgelegt ist, dass es dem dritten Arm (33) erlaubt, sich um die Längsachse (A3) zu drehen, die im Wesentlichen parallel zur Vorwärtsrichtung (DA) des Kraftfahrzeugs (20) verläuft.

5. System (1) gemäß einem oder mehreren der vorstehenden Ansprüche, **dadurch gekennzeichnet, dass** jedes der Gelenke (31A, 32A, 33A) an den Enden der jeweiligen Arme (31, 32, 33) positioniert ist.

6. System (1) gemäß einem oder mehreren der vorstehenden Ansprüche, **dadurch gekennzeichnet, dass** der dritte Arm (33) teleskopartig ausgebildet ist und aus mindestens zwei Segmenten, insbesondere rohrförmigen Segmenten, besteht, die zum Vergrößern oder Verkleinern der Verlängerung des dritten Arms (33) ineinander verschiebbar sind.

7. System (1) gemäß einem oder mehreren der vorstehenden Ansprüche, **dadurch gekennzeichnet, dass** die Greifvorrichtung (34) mit dem dritten Arm (33) mittels eines vierten Gelenks (34A) verbunden ist, das so ausgelegt ist, dass es der Greifvorrichtung (34) erlaubt, sich zu bewegen, um sie mit der Hakenvorrichtung (11) des Behälters (10) auszurichten.

8. System (1) gemäß Anspruch 7, **dadurch gekennzeichnet, dass** die Greifvorrichtung (34) und das vierte Gelenk (34A) mit einem distalen Ende des dritten Arms (33) verbunden sind, insbesondere mit einem Ende des dritten Arms (33), das dem Ende des dritten Arms (33) gegenüberliegt, das mit dem zweiten Arm (32) verbunden ist.

9. System (1) gemäß einem oder mehreren der vorstehenden Ansprüche, **dadurch gekennzeichnet, dass** die Gelenke (31A, 32A, 33A, 34A) durch Betätigungsmittel aktiviert werden, die von einer Steuereinheit des Systems (1) gesteuert und verwaltet werden.

10. Verfahren zur Abfallsammlung, insbesondere zur getrennten Abfallsammlung, mittels eines Systems (1) gemäß Anspruch 1, wobei das System (1) umfasst:
- einen Abfallbehälter (10), der mit einer Hakenvorrichtung (11) zum Bewegen desselben ausgestattet ist;
- ein Kraftfahrzeug (20), das eine Vorwärtsrichtung (DA) und zwei seitliche Abschnitte oder Bereiche relativ zu dieser Vorwärtsrichtung (DA) definiert,
wobei das Kraftfahrzeug (20) eine Kupplungsvorrichtung (30) umfasst, die eine Greifvorrichtung (34) umfasst, die dazu ausgelegt ist, mit der Hakenvorrichtung (11) des Behälters (10) gekoppelt zu werden, um den Behälter (10) zu handhaben und/oder zu entleeren (10), wobei das Verfahren mindestens umfasst:
- eine Phase eines Verlängerns der Kupplungsvorrichtung (30), um die Greifvorrichtung (34) so zu positionieren, dass sie mit der Hakenvorrichtung (11) des Behälters (10) gekoppelt werden kann, und
- eine Phase eines Handhabens des Behälters (10) mittels der Kupplungsvorrichtung (30), wobei in dem Verfahren die Ausfahr- und Handhabungsphasen durch die folgenden Schritte durchgeführt werden:
- Aktivieren eines ersten Gelenks (31A), das einen ersten Arm (31) der Kupplungsvorrichtung (30) mit einer vertikalen Wand (23) des Kraftfahrzeugs (20) verbindet, so dass der erste Arm (31) im Wesentlichen senkrecht zu einer Vorwärtsrichtung (DA) des Kraftfahrzeugs (20) angeordnet ist, wobei die Aktivierung des ersten Gelenks (31A) es dem ersten Arm (31) ermöglicht, sich um eine erste Drehachse (A1) zu drehen, die parallel zur Vorwärtsrichtung (DA) des Kraftfahrzeugs (20) verläuft, und es dem ersten Arm (31) ermöglicht, sich in einer Querebene zu bewegen, die im Wesentlichen senkrecht zur Vorwärtsrichtung (DA) des Kraftfahrzeugs (20) verläuft;
- Aktivieren eines zweiten Gelenks (32A), das einen zweiten Arm (32) der Kupplungsvorrichtung (30) mit dem ersten Arm (31) verbindet, so dass der zweite Arm (32) im Wesentlichen senkrecht zur Vorwärtsrichtung (DA) des Kraftfahrzeugs (20) angeordnet ist, wobei die Aktivierung des zweiten Gelenks (32A) es dem zweiten Arm (32) ermöglicht, sich um eine zweite Drehachse (A2) zu drehen, die parallel zur Vorwärtsrichtung (DA) des Kraftfahrzeugs (20) verläuft, und es dem zweiten Arm (32) ermöglicht, sich in einer Querebene zu bewegen, die im Wesentlichen senkrecht zur Vorwärtsrichtung (DA) des Kraftfahrzeugs (20) verläuft.

11. Verfahren (1) gemäß Anspruch 10, **dadurch gekennzeichnet, dass** die Verlängerungs- und Handhabungsphasen mindestens einen der folgenden Schritte umfassen:
- Aktivieren eines dritten Gelenks (33A), das einen dritten Arm (33) der Kupplungsvorrichtung (30) mit dem zweiten Arm (32) verbindet, so dass der dritte Arm (33) auf einer Längsachse (A3) liegt, die im Wesentlichen parallel zur Vorwärtsrichtung (DA) des Kraftfahrzeugs (20) angeordnet ist, wobei die Aktivierung des dritten Gelenks (33A) es dem dritten Arm (33) ermöglicht, sich um die Längsachse (A3) zu drehen;
- Aktivieren von Betätigungsmitteln, um den teleskopartigen dritten Arm (33) zu verlängern oder einzufahren;
- Aktivieren eines vierten Gelenks (34A), das den dritten Arm (33) mit der Greifvorrichtung (34) verbindet, wobei die Aktivierung des vierten Gelenks (34A) es ermöglicht, die Greifvorrichtung (34) mit der Hakenvorrichtung (11) des Behälters (10) auszurichten.

12. Verfahren (1) gemäß einem oder mehreren der Ansprüche 10 und 11, **dadurch gekennzeichnet, dass** es eine Phase eines Koppelns der Greifvorrichtung (34) der Kupplungsvorrichtung (30) mit der Hakenvorrichtung (11) des Behälters (10) umfasst, wobei die Kopplungsphase durch Aktivieren eines Mechanismus durchgeführt wird, der dazu ausgelegt ist, die Verbindung zwischen der Greifvorrichtung (34) und der Hakenvorrichtung (11) sicherzustellen.

13. Verfahren (1) gemäß einem oder mehreren der Ansprüche 10 bis 12, **dadurch gekennzeichnet, dass** es eine Phase eines Entleerens des Behälters (10) umfasst, wobei die Entleerungsphase durch Aktivieren eines Mechanismus der Greifvorrichtung (34) und/oder der Hakenvorrichtung (11) durchgeführt wird, der dafür ausgelegt ist, das Öffnen des Behälters (10) und das Entleeren seines Inhalts in einen Kippaufbau (21) des Kraftfahrzeugs (20) sicherzustellen.

14. Verfahren (1) gemäß einem oder mehreren der Ansprüche 10 bis 13, **dadurch gekennzeichnet, dass** eine oder mehrere Phasen durch eine Steuereinheit gesteuert und verwaltet werden, die insbesondere mit einer Vielzahl von Sensoren verbunden ist.

## Revendications

1. - Système (1) pour la collecte de déchets, en particulier pour la collecte différenciée de déchets, comprenant :
- un conteneur de déchets (10) équipé de moyens d'accrochage (11) pour le déplacer,
- un véhicule à moteur (20) qui définit une direction d'avance (DA) et deux parties ou zones latérales par rapport à ladite direction d'avance (DA),
dans lequel ledit véhicule à moteur (20) comprend un dispositif de couplage (30) comprenant des moyens de préhension (34) aptes à être couplés aux moyens d'accrochage (11) du conteneur (10) pour manipuler et/ou vider ledit conteneur (10), et
dans lequel ledit dispositif de couplage (30) comprend un premier bras (31) relié à une paroi verticale (23) du véhicule à moteur (20) au moyen d'une première articulation (31A), ledit premier bras (31) étant disposé sensiblement perpendiculairement à la direction d'avance (DA) du véhicule à moteur (20),
ladite première articulation (31A) étant apte à permettre au premier bras (31) de tourner autour d'un premier axe de rotation (Al) qui est parallèle à la direction d'avance (DA) du véhicule à moteur (20) et à permettre au premier bras (31) de se déplacer dans un plan transversal qui est sensiblement perpendiculaire à la direction d'avance (DA) du véhicule à moteur (20),
ledit système (1) étant **caractérisé par le fait que**
ladite première articulation (31A) est configurée pour permettre au premier bras (31) de tourner d'approximativement 360° autour du premier axe de rotation (A1),
dans lequel le dispositif de couplage (30) comprend en outre :
- un deuxième bras (32) relié au premier bras (31) au moyen d'une deuxième articulation (32A), ledit deuxième bras (32) étant disposé sensiblement perpendiculairement à la direction d'avance (DA) du véhicule à moteur (20), ladite deuxième articulation (32A) étant apte à permettre au deuxième bras (32) de tourner autour d'un deuxième axe de rotation (A2) qui est parallèle à la direction d'avance (DA) du véhicule à moteur (20) et à permettre au deuxième bras (32) de se déplacer dans un plan transversal qui est sensiblement perpendiculaire à la direction d'avance (DA) du véhicule à moteur (20) ;
- un troisième bras (33) relié au deuxième bras (32) de manière à se trouver sur un axe longitudinal (A3) disposé sensiblement parallèlement à la direction d'avance (DA) du véhicule à moteur (20), lesdits moyens de préhension (34) étant reliés au troisième bras (33).

2. - Système (1) selon la revendication 1, **caractérisé par le fait que** la liaison entre la première articulation (31A) et la paroi verticale (23) est disposée à une hauteur de ladite paroi verticale (23) qui dépasse la longueur du premier bras (31).

3. - Système (1) selon l'une ou plusieurs des revendications précédentes, **caractérisé par le fait que** ladite deuxième articulation (32A) est configurée pour permettre au deuxième bras (32) de tourner d'approximativement 360° autour du deuxième axe de rotation (A2).

4. - Système (1) selon l'une ou plusieurs des revendications précédentes, **caractérisé par le fait que** le troisième bras (33) est relié au deuxième bras (32) au moyen d'une troisième articulation (33A) apte à permettre au troisième bras (33) de tourner autour dudit axe longitudinal (A3) qui est sensiblement parallèle à la direction d'avance (DA) du véhicule à moteur (20).

5. - Système (1) selon l'une ou plusieurs des revendications précédentes, **caractérisé par le fait que** chacune desdites articulations (31A, 32A, 33A) est positionnée aux extrémités des bras respectifs (31, 32, 33).

6. - Système (1) selon l'une ou plusieurs des revendications précédentes, **caractérisé par le fait que** le troisième bras (33) est du type télescopique et est composé d'au moins deux segments, en particulier tubulaires, aptes à coulisser l'un dans l'autre dans le but d'augmenter ou de diminuer l'étendue du troisième bras (33).

7. - Système (1) selon l'une ou plusieurs des revendications précédentes, **caractérisé par le fait que** lesdits moyens de préhension (34) sont reliés au troisième bras (33) au moyen d'une quatrième articulation (34A) apte à permettre auxdits moyens de préhension (34) d'être déplacés dans le but de les aligner avec les moyens d'accrochage (11) du conteneur (10).

8. - Système (1) selon la revendication 7, **caractérisé par le fait que** les moyens de préhension (34) et la quatrième articulation (34A) sont reliés à une extrémité distale du troisième bras (33), en particulier à une extrémité du troisième bras (33) qui est opposée à l'extrémité du troisième bras (33) qui est reliée au deuxième bras (32).

9. - Système (1) selon l'une ou plusieurs des revendications précédentes, **caractérisé par le fait que** les articulations (31A, 32A, 33A, 34A) sont activées par des moyens d'actionnement commandés et gérés par une unité de commande du système (1).

10. - Procédé de collecte de déchets, en particulier de collecte différenciée de déchets, au moyen d'un système (1) selon la revendication 1, ledit système (1) comprenant :
- un conteneur de déchets (10) équipé de moyens d'accrochage (11) pour le déplacer ;
- un véhicule à moteur (20) qui définit une direction d'avance (DA) et deux parties ou zones latérales par rapport à ladite direction d'avance (DA),
dans lequel ledit véhicule à moteur (20) comprend un dispositif de couplage (30) comprenant des moyens de préhension (34) aptes à être couplés aux moyens d'accrochage (11) du conteneur (10) pour manipuler et/ou vider ledit conteneur (10),
ledit procédé comprenant au moins :
- une phase d'extension du dispositif de couplage (30) afin de positionner les moyens de préhension (34) d'une manière telle qu'ils puissent être couplés aux moyens d'accrochage (11) du conteneur (10), et
- une phase de manipulation du conteneur (10) au moyen du dispositif de couplage (30),
dans lequel, dans le procédé, lesdites phases d'extension et de manipulation sont effectuées par les étapes suivantes :
- activation d'une première articulation (31A) qui réunit un premier bras (31) du dispositif de couplage (30) à une paroi verticale (23) du véhicule à moteur (20) de telle sorte que ledit premier bras (31) soit disposé sensiblement perpendiculairement à une direction d'avance (DA) du véhicule à moteur (20), l'activation de la première articulation (31A) permettant au premier bras (31) de tourner autour d'un premier axe de rotation (A1) qui est parallèle à la direction d'avance (DA) du véhicule à moteur (20) et permettant au premier bras (31) de se déplacer dans un plan transversal qui est sensiblement perpendiculaire à la direction d'avance (DA) du véhicule à moteur (20) ;
- activation d'une deuxième articulation (32A) qui réunit un deuxième bras (32) du dispositif de couplage (30) audit premier bras (31) de telle sorte que ledit deuxième bras (32) soit disposé sensiblement perpendiculairement à la direction d'avance (DA) du véhicule à moteur (20), l'activation de la deuxième articulation (32A) permettant au deuxième bras (32) de tourner autour d'un deuxième axe de rotation (A2) qui est parallèle à la direction d'avance (DA) du véhicule à moteur (20) et permettant au deuxième bras (32) de se déplacer dans un plan transversal qui est sensiblement perpendiculaire à la direction d'avance (DA) du véhicule à moteur (20).

11. - Procédé (1) selon la revendication 10, **caractérisé par le fait que** lesdites phases d'extension et de manipulation comprennent au moins l'une des étapes suivantes :
- activation d'une troisième articulation (33A) qui réunit un troisième bras (33) du dispositif de couplage (30) audit deuxième bras (32) de telle sorte que ledit troisième bras (33) se trouve sur un axe longitudinal (A3) disposé sensiblement parallèlement à la direction d'avance (DA) du véhicule à moteur (20), l'activation de la troisième articulation (33A) permettant au troisième bras (33) de tourner autour dudit axe longitudinal (A3) ;
- activation de moyens d'actionnement afin d'étendre ou de rétracter un troisième bras (33) du type télescopique ;
- activation d'une quatrième articulation (34A) qui réunit le troisième bras (33) auxdits moyens de préhension (34), l'activation de ladite quatrième articulation (34A) permettant aux moyens de préhension (34) d'être alignés avec les moyens d'accrochage (11) du conteneur (10).

12. - Procédé (1) selon l'une ou plusieurs des revendications 10 et 11, **caractérisé par le fait qu'**il comprend une phase de couplage des moyens de préhension (34) du dispositif de couplage (30) aux moyens d'accrochage (11) du conteneur (10), ladite phase de couplage étant réalisée par l'activation d'un mécanisme apte à assurer la liaison entre lesdits moyens de préhension (34) et lesdits moyens d'accrochage (11).

13. - Procédé (1) selon l'une ou plusieurs des revendications 10 à 12, **caractérisé par le fait qu'**il comprend une phase de vidage du conteneur (10), ladite phase de vidage étant réalisée par activation d'un mécanisme des moyens de préhension (34) et/ou des moyens d'accrochage (11) qui est apte à assurer l'ouverture du conteneur (10) et la décharge de son contenu dans une benne (21) du véhicule à moteur (20).

14. - Procédé (1) selon l'une ou plusieurs des revendications 10 à 13, **caractérisé par le fait qu'**une ou plusieurs phases sont commandées et gérées par une unité de commande, notamment associée à une pluralité de capteurs.
